# EUROPEAN PATENT SPECIFICATION

(11) **EP 3 053 893 B1**
(45) Date of publication and mention of the grant of the patent: **11.11.2020**
(21) Application number: 14849888.4
(22) Date of filing: 30.09.2014
(51) Int. Cl.: C03C 27/12

(54) **INTERLAYER FILM FOR LAMINATED GLASS, AND LAMINATED GLASS**
ZWISCHENSCHICHTFOLIE FÜR LAMINIERTES GLAS UND LAMINIERTES GLAS
FILM INTERCALAIRE POUR VERRE FEUILLETÉ ET VERRE FEUILLETÉ

(30) Priority: 30.09.2013 JP 2013204322
(43) Date of publication of application: 10.08.2016
(73) Proprietor: Sekisui Chemical Co., Ltd., Osaka-shi, Osaka 530-8565 (JP)
(72) Inventor: NAKAYAMA, Kazuhiko, Kouka-shi Shiga 528-8585 (JP); FUKATANI, Juichi, Mishima-gun Osaka 618-0021 (JP); II, Daizou, Kouka-shi Shiga 528-8585 (JP); OOTA, Yuusuke, Kouka-shi Shiga 528-8585 (JP)
(74) Representative: Ter Meer Steinmeister & Partner
(86) International application number: PCT/JP2014/076143
(87) International publication number: WO 2015/046584

(56) References cited:
- WO-A1-2013/118890
- JP-A- S56 140 050
- JP-A- 2004 279 512
- JP-A- 2012 206 877
- US-A- 5 218 022
- US-A1- 2012 162 752

## Description

### TECHNICAL FIELD

The present invention relates to an interlayer film for laminated glass used for laminated glass of automobiles, buildings and the like. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates. Such laminated glass used for an opening part of vehicles and buildings is required to have high heat shielding properties.

The energy amount of an infrared ray with a wavelength greater than or equal to 780 nm which is longer than that of visible light is small as compared with an ultraviolet ray. However, the thermal action of infrared rays is large, and when infrared rays are absorbed into a substance, heat is released from the substance. As such, infrared rays are generally called heat rays. Thus, in order to enhance the heat shielding properties of laminated glass, it is necessary to sufficiently cut off infrared rays.

For effectively cutting off the infrared rays (heat rays), Patent Document 1 below discloses an interlayer film including tin-doped indium oxide particles (ITO particles) or antimony-doped tin oxide particles (ATO particles). Patent Document 2 below discloses an interlayer film including tungsten oxide particles.

### Related Art Document

### Patent Documents

Patent Document 1: WO 2001/025162 A1
Patent Document 2: WO 2005/087680 A1

### SUMMARY OF THE INVENTION

### PROBLEMS TO BE SOLVED BY THE INVENTION

In the conventional interlayer films such as those described in Patent Documents 1 and 2, the visible light transmittance may be lowered while laminated glass prepared with the interlayer film is used. In particular, when laminated glass prepared with an interlayer film including tungsten oxide particles is used for a long period of time under a high temperature environment, there is a problem that the visible light transmittance is easy to be lowered significantly.

Moreover, laminated glass using an interlayer film including heat shielding particles such as ITO particles, ATO particles or tungsten oxide particles is required to achieve both high heat shielding properties and high visible light transmittance (Visible Transmittance) at the same time. That is, with regard to the laminated glass, it is necessary to enhance the heat shielding properties while maintaining the visible light transmittance high even under a high temperature environment. Furthermore, it has been demanded to maintain high visible light transmittance over a long period of time even under a high temperature environment.

An object of the present invention is to provide an interlayer film for laminated glass which is capable of maintaining the visible light transmittance high over a long period of time since the interlayer film is high in heat shielding properties, and furthermore, is excellent in heat resistance, and to provide laminated glass prepared with the interlayer film for laminated glass.

### MEANS FOR SOLVING THE PROBLEMS

According to a broad aspect of the present invention, there is provided an interlayer film for laminated glass including a thermoplastic resin, heat shielding particles and a corrosion inhibitor; and the corrosion inhibitor being a corrosion inhibitor represented by the following formula (11) .

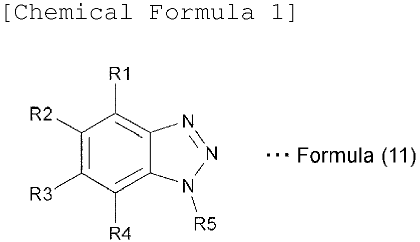

In the formula (11), R1 to R4 each represent a hydrogen atom or a methyl group, and R5 represents a hydrogen atom or an organic group having 1 to 30 carbon atoms but containing no nitrogen atom.

In a specific aspect of the interlayer film for laminated glass according to the present invention, the heat shielding particles contain tungsten oxide particles.

In a specific aspect of the interlayer film for laminated glass according to the present invention, the heat shielding particles contain tin-doped indium oxide particles and the tungsten oxide particles.

In a specific aspect of the interlayer film for laminated glass according to the present invention, the interlayer film for laminated glass includes at least one kind of ingredient among a phthalocyanine compound, a naphthalocyanine compound and an anthracyanine compound.

In a specific aspect of the interlayer film for laminated glass according to the present invention, the heat shielding particles contain tungsten oxide particles, and the interlayer film for laminated glass includes at least one kind of the ingredient among a phthalocyanine compound, a naphthalocyanine compound and an anthracyanine compound.

In a specific aspect of the interlayer film for laminated glass according to the present invention, the heat shielding particles contain tin-doped indium oxide particles and tungsten oxide particles, and the interlayer film for laminated glass includes at least one kind of the ingredient among a phthalocyanine compound, a naphthalocyanine compound and an anthracyanine compound.

In a specific aspect of the interlayer film for laminated glass according to the present invention, the interlayer film for laminated glass includes a plasticizer.

According to a broad aspect of the present invention, there is provided laminated glass including a first laminated glass member, a second laminated glass member and the interlayer film for laminated glass, wherein the interlayer film for laminated glass is arranged between the first laminated glass member and the second laminated glass member.

### EFFECT OF THE INVENTION

Since the interlayer film for laminated glass according to the present invention includes a thermoplastic resin, heat shielding particles and a corrosion inhibitor, and furthermore, the above-mentioned corrosion inhibitor is a corrosion inhibitor represented by the formula (11), the heat shielding properties of the interlayer film is enhanced, furthermore, the heat resistance of the interlayer film is enhanced, and the visible light transmittance can be maintained high over a long period of time.

### BRIEF DESCRIPTION OF DRAWINGS

[Fig. 1] Fig. 1 is a partially cutaway cross-sectional view showing laminated glass prepared with an interlayer film for laminated glass in accordance with one embodiment of the present invention.
[Fig. 2] Fig. 2 is a partially cutaway sectional view showing another example of laminated glass prepared with an interlayer film for laminated glass in accordance with another embodiment of the present invention.

### MODE(S) FOR CARRYING OUT THE INVENTION

Hereinafter, the details of the present invention will be described.

The interlayer film for laminated glass according to the present invention includes a thermoplastic resin, heat shielding particles and a corrosion inhibitor.

Since the interlayer film for laminated glass according to the present invention has the composition mentioned above, in the case of being used for constituting laminated glass, it is possible to enhance the heat shielding properties of the resulting laminated glass. Furthermore, the heat resistance of the interlayer film is enhanced, and the visible light transmittance can be maintained high over a long period of time.

Furthermore, in the interlayer film for laminated glass according to the present invention, the above-mentioned corrosion inhibitor is a corrosion inhibitor represented by the formula (11) described later. Thus, the heat resistance of laminated glass prepared with the interlayer film for laminated glass according to the present invention is effectively enhanced, and the visible light transmittance can be maintained high over a longer period of time.

From the viewpoint of further enhancing the heat shielding properties of the interlayer film, it is preferred that the above-mentioned heat shielding particles contain tungsten oxide particles, and it is more preferred that the heat shielding particles contain tin-doped indium oxide particles and tungsten oxide particles.

It is preferred that the interlayer film for laminated glass according to the present invention include at least one kind of ingredient among a phthalocyanine compound, a naphthalocyanine compound and an anthracyanine compound. Hereinafter, at least one kind of ingredient among a phthalocyanine compound, a naphthalocyanine compound and an anthracyanine compound may be sometimes described as Ingredient X. By the use of the Ingredient X, it is possible to further enhance the heat shielding properties of the interlayer film and to further enhance the visible light transmittance.

Moreover, when laminated glass prepared with an interlayer film including tungsten oxide particles is used for a long period of time, there is a problem that the visible light transmittance is easy to be lowered significantly.

In contrast, since the heat resistance of an interlayer film is enhanced by adopting the above-mentioned composition according to the present invention, it is preferred that the interlayer film include a thermoplastic resin, tungsten oxide particles and a corrosion inhibitor, and it is more preferred that the interlayer film include a thermoplastic resin, tungsten oxide particles, the Ingredient X and a corrosion inhibitor.

In the interlayer film for laminated glass according to the present invention, it is preferred that the heat shielding particles contain tin-doped indium oxide particles and tungsten oxide particles and the interlayer film include the Ingredient X. In this case, it is possible to still further enhance the heat shielding properties of the interlayer film and to still further enhance the visible light transmittance.

Laminated glass prepared with an interlayer film has hitherto been sometimes low in heat shielding properties and sometimes high in solar transmittance. Furthermore, with regard to the conventional laminated glass, there is a problem that achieving both low solar transmittance and high visible light transmittance (Visible Transmittance) at the same time is difficult.

In order to sufficiently enhance the heat shielding properties and the visible light transmittance of laminated glass, in the present invention, it is preferred that the interlayer film include a thermoplastic resin, tungsten oxide particles and the Ingredient X. Using tin-doped indium oxide particles, tungsten oxide particles and the Ingredient X together greatly contributes to effectively enhancing the heat shielding properties of laminated glass. Furthermore, by the use of the interlayer film including tin-doped indium oxide particles, tungsten oxide particles and the Ingredient X, it is possible to obtain laminated glass that is low in solar transmittance, which is an index of heat shielding properties, and furthermore, it is possible to obtain laminated glass that is high in visible light transmittance mentioned above. For example, it is possible to allow the solar transmittance in the wavelength range of 300 to 2100 nm (Ts2100) of laminated glass to be less than or equal to 65% and to allow the visible light transmittance to be greater than or equal to 65%. Furthermore, it is also possible to allow the solar transmittance (Ts2100) to be less than or equal to 50%, and furthermore, it is possible to allow the visible light transmittance to be greater than or equal to 70%.

Furthermore, as a result of study, the present inventors have found that only by simply preparing laminated glass using an interlayer film including tungsten oxide particles or an interlayer film including tin-doped indium oxide particles, when sunlight is made incident through the laminated glass, a person positioned on the inner side of the laminated glass is easy to appreciably have feeling of scorching hotness caused by sunlight.

Accordingly, as a result of study, the present inventors have found a constitution of laminated glass capable of suppressing feeling of scorching hotness caused by sunlight.

That is, the present inventors have also found that by adopting the composition including a thermoplastic resin, tin-doped indium oxide particles, tungsten oxide particles and the Ingredient X, when sunlight is made incident through laminated glass prepared with the interlayer film, it is possible to suppress a person positioned on the inner side of the laminated glass from having feeling of scorching hotness caused by sunlight. In order to effectively suppress feeling of scorching hotness, it is preferred that the light transmittance at a wavelength of 1550 nm of the laminated glass be less than or equal to 10%.

Furthermore, due to the recent sophistication of automobiles, for example, incidental equipment such as sensors including a light sensor and a rain sensor and a CCD camera may be provided to a windshield. Moreover, with regard to an interlayer film for laminated glass used for buildings, various kinds of incidental equipment may be provided. In particular, as incidental equipment, on-board equipment performing control and the like by means of an infrared ray communication wave has been widely used. For example, a rain sensor detects the presence or absence of raindrops by allowing raindrops on a windshield to reflect an infrared ray at a wavelength of about 850 nm. Such an infrared ray communication wave used for control of on-board equipment and the like is generally a near infrared ray in the wavelength range of about 800 to 1000 nm.

In order to enhance the detection accuracy of such various sensors, it is preferred that the light transmittance at a wavelength of 850 nm of an interlayer film be greater than or equal to 20%. It is preferred that the interlayer film for laminated glass according to the present invention include a thermoplastic resin, tin-doped indium oxide particles, tungsten oxide particles and the Ingredient X. By adopting such composition, the light transmittance at a wavelength of 850 nm is enhanced. As such, it is possible to enhance the detection accuracy of various sensors provided to laminated glass prepared with the interlayer film for laminated glass according to the present invention.

Hereinafter, the details of materials constituting the interlayer film for laminated glass according to the present invention will be described.

### (Thermoplastic resin)

A thermoplastic resin included in the above-mentioned interlayer film is not particularly limited. As the thermoplastic resin, a conventionally known thermoplastic resin can be used. One kind of the thermoplastic resin may be used alone and two or more kinds thereof may be combinedly used.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, and the like. Thermoplastic resins other than these may be used.

It is preferred that the thermoplastic resin be a polyvinyl acetal resin. By the use of a polyvinyl acetal resin and a plasticizer together, the adhesive force of the interlayer film for laminated glass according to the present invention to a laminated glass member or another interlayer film for laminated glass is further enhanced.

For example, the polyvinyl acetal resin can be produced by acetalizing polyvinyl alcohol with an aldehyde. For example, the polyvinyl alcohol can be produced by saponifying polyvinyl acetate. The saponification degree of the polyvinyl alcohol generally falls within the range of 70 to 99.8% by mol.

The average polymerization degree of the polyvinyl alcohol is preferably greater than or equal to 200, more preferably greater than or equal to 500, preferably less than or equal to 3500, more preferably less than or equal to 3000, and further preferably less than or equal to 2500. When the average polymerization degree is greater than or equal to the above lower limit, the penetration resistance of laminated glass is further enhanced. When the average polymerization degree is less than or equal to the above upper limit, formation of an interlayer film is facilitated.

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin be 3 or 4. When the number of carbon atoms of the acetal group in the polyvinyl acetal resin is greater than or equal to 3, the glass transition temperature of the interlayer film is sufficiently lowered.

The aldehyde is not particularly limited. In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Of these, propionaldehyde, n-butyraldehyde, isobutyraldehyde, n-hexylaldehyde or n-valeraldehyde is preferred, propionaldehyde, n-butyraldehyde or isobutyraldehyde is more preferred, and n-butyraldehyde is further preferred. One kind of the aldehyde may be used alone and two or more kinds thereof may be combinedly used.

The hydroxyl content (the amount of hydroxyl groups) of the polyvinyl acetal resin is preferably greater than or equal to 15% by mol, more preferably greater than or equal to 18% by mol, preferably less than or equal to 40% by mol, and more preferably less than or equal to 35% by mol. When the hydroxyl content is greater than or equal to the above lower limit, the adhesive force of the interlayer film is further enhanced. Moreover, when the hydroxyl content is less than or equal to the above upper limit, the flexibility of the interlayer film is enhanced and the handling of the interlayer film is facilitated.

The hydroxyl content of the polyvinyl acetal resin is a value expressing the molar fraction determined by dividing the amount of ethylene groups to which the hydroxyl group is bonded by the total amount of ethylene groups in the main chain in terms of percentage. For example, the amount of ethylene groups to which the hydroxyl group is bonded can be measured in accordance with JIS K6726 "Testing methods for polyvinyl alcohol" or in accordance with ASTM D1396-92 to be determined.

The acetylation degree (the amount of acetyl groups) of the polyvinyl acetal resin is preferably greater than or equal to 0.1% by mol, more preferably greater than or equal to 0.3% by mol, further preferably greater than or equal to 0.5% by mol, preferably less than or equal to 30% by mol, more preferably less than or equal to 25% by mol, and further preferably less than or equal to 20% by mol. When the acetylation degree is greater than or equal to the above lower limit, the compatibility between the polyvinyl acetal resin and a plasticizer is enhanced. When the acetylation degree is less than or equal to the above upper limit, the moisture resistance of the interlayer film and laminated glass is enhanced.

The acetylation degree is a value expressing the molar fraction determined by dividing a value obtained by subtracting the amount of ethylene groups to which the acetal group is bonded and the amount of ethylene groups to which the hydroxyl group is bonded from the total amount of ethylene groups in the main chain by the total amount of ethylene groups in the main chain in terms of percentage. For example, the amount of ethylene groups to which the acetal group is bonded can be measured in accordance with JIS K6728 "Testing methods for polyvinyl butyral" or in accordance with ASTM D1396-92.

The acetalization degree of the polyvinyl acetal resin (the butyralization degree in the case of a polyvinyl butyral resin) is preferably greater than or equal to 60% by mol, more preferably greater than or equal to 63% by mol, preferably less than or equal to 85% by mol, more preferably less than or equal to 75% by mol, and further preferably less than or equal to 70% by mol. When the acetalization degree is greater than or equal to the above lower limit, the compatibility between the polyvinyl acetal resin and a plasticizer is enhanced. When the acetalization degree is less than or equal to the above upper limit, the reaction time required for producing the polyvinyl acetal resin is shortened.

The acetalization degree is a value expressing the molar fraction determined by dividing the amount of ethylene groups to which the acetal group is bonded by the total amount of ethylene groups in the main chain in terms of percentage.

The acetalization degree can be calculated by measuring the acetylation degree and the hydroxyl content by a method in accordance with JIS K6728 "Testing methods for polyvinyl butyral" or a method in accordance with ASTM D1396-92, calculating the molar fraction from the measurement results obtained, and then subtracting the acetylation degree and the hydroxyl content from 100% by mol.

It is preferred that the hydroxyl content (the amount of hydroxyl groups), the acetalization degree (the butyralization degree) and the acetylation degree be calculated from the results measured by a method in accordance with JIS K6728 "Testing methods for polyvinyl butyral" . In the case where the polyvinyl acetal resin is a polyvinyl butyral resin, it is preferred that the hydroxyl content (the amount of hydroxyl groups), the acetalization degree (the butyralization degree) and the acetylation degree be calculated from the results measured by a method in accordance with JIS K6728 "Testing methods for polyvinyl butyral".

### (Plasticizer)

From the viewpoint of further enhancing the adhesive force of the interlayer film, it is preferred that the above-mentioned interlayer film include a plasticizer. In the case where the thermoplastic resin included in the interlayer film is a polyvinyl acetal resin, it is especially preferred that the interlayer film include a plasticizer.

The plasticizer is not particularly limited. As the plasticizer, a conventionally known plasticizer can be used. One kind of the plasticizer may be used alone and two or more kinds thereof may be combinedly used.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

The monobasic organic acid ester is not particularly limited and examples thereof include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, hepthylic acid, n-octylic acid, 2-ethylhexanoic acid, n-nonylic acid, decylic acid, and the like.

The polybasic organic acid ester is not particularly limited and examples thereof include ester compounds of a polybasic organic acid and an alcohol having a linear or branched structure of 4 to 8 carbon atoms. Examples of the polybasic organic acid include adipic acid, sebacic acid, azelaic acid, and the like.

The organic ester plasticizer is not particularly limited and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapryate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyd, a mixture of a phosphoric acid ester and an adipic acid ester, and the like. Organic ester plasticizers other than these may be used.

The organic phosphate plasticizer is not particularly limited and examples thereof include tributoxyethyl phosphate, isodecyl phenyl phosphate, triisopropyl phosphate, and the like.

It is preferred that the plasticizer be a diester plasticizer represented by the following formula (1).

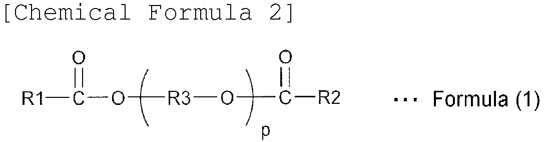

In the foregoing formula (1), R1 and R2 each represent an organic group with 5 to 10 carbon atoms, R3 represents an ethylene group, an isopropylene group or a n-propylene group, and p represents an integer of 3 to 10. It is preferred that R1 and R2 in the foregoing formula (1) each be an organic group with 6 to 10 carbon atoms.

It is preferred that the plasticizer include at least one kind among triethylene glycol di-2-ethylhexanoate (3GO) and triethylene glycol di-2-ethylbutyrate (3GH), and it is more preferred that the plasticizer include triethylene glycol di-2-ethylhexanoate.

The content of the plasticizer is not particularly limited. Relative to 100 parts by weight of the above-mentioned thermoplastic resin, the content of the plasticizer is preferably greater than or equal to 25 parts by weight, more preferably greater than or equal to 30 parts by weight, preferably less than or equal to 90 parts by weight, more preferably less than or equal to 60 parts by weight, and further preferably less than or equal to 50 parts by weight. When the content of the plasticizer is greater than or equal to the above lower limit, the penetration resistance of laminated glass is further enhanced. When the content of the plasticizer is less than or equal to the above upper limit, the transparency of the interlayer film is further enhanced.

### (Corrosion inhibitor)

By allowing the above-mentioned interlayer film to include a corrosion inhibitor, the heat resistance of the interlayer film is enhanced, and the visible light transmittance can be maintained high over a long period of time. One kind of the corrosion inhibitor may be used alone and two or more kinds thereof may be combinedly used.

In the interlayer film for laminated glass according to the present invention, the corrosion inhibitor is a corrosion inhibitor represented by the following formula (11). By the use of this specific corrosion inhibitor, the heat resistance is effectively enhanced, and the visible light transmittance can be maintained high over a longer period of time.

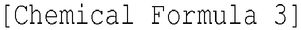

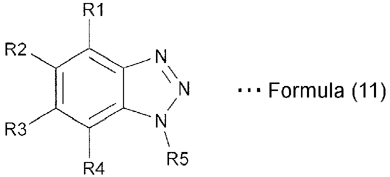

In the foregoing formula (11), R1 to R4 each represent a hydrogen atom or a methyl group, and R5 represents a hydrogen atom or an organic group having 1 to 30 carbon atoms but containing no nitrogen atom. Since the heat resistance of the interlayer film for laminated glass is further enhanced, R5 contains no nitrogen atom. It is preferred that R5 represent a hydrogen atom or an alkyl group having 1 to 30 carbon atoms, and R5 may be a hydrogen atom and may be an alkyl group having 1 to 30 carbon atoms. In the case where R5 is an alkyl group having 1 to 30 carbon atoms, the number of carbon atoms of the alkyl group may be less than or equal to 10 and may be less than or equal to 4.

From the viewpoint of effectively enhancing the light resistance and the heat resistance of the interlayer film, it is preferred that the corrosion inhibitor be a corrosion inhibitor represented by the following formula (11A).

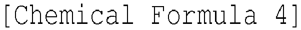

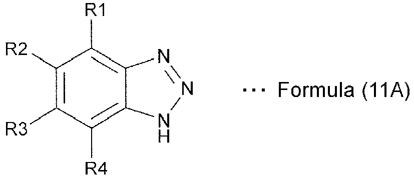

In the foregoing formula (11A), R1 to R4 each represent a hydrogen atom or a methyl group.

In the foregoing formula (11) and the foregoing formula (11A), it is preferred that three to four of the four substituents of R1 to R4 be hydrogen atoms and zero or one thereof be a methyl group.

The content of the corrosion inhibitor is not particularly limited. In 100% by weight of the interlayer film, the content of the corrosion inhibitor is preferably greater than or equal to 0.01% by weight, more preferably greater than or equal to 0.05% by weight, further preferably greater than or equal to 0.1% by weight, preferably less than or equal to 1.5% by weight, more preferably less than or equal to 0.45% by weight, further preferably less than or equal to 0.4% by weight, and especially preferably less than or equal to 0.3% by weight. When the content of the corrosion inhibitor is greater than or equal to the above lower limit and less than or equal to the above upper limit, the light resistance and the heat resistance of the interlayer film are effectively enhanced.

### (Heat shielding particles)

The above-mentioned heat shielding particles are not particularly limited. One kind of the heat shielding particles may be used alone and two or more kinds thereof may be combinedly used.

The energy amount of an infrared ray with a wavelength greater than or equal to 780 nm which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. The heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. The heat shielding particles may be metal oxide particles or lanthanum hexaboride particles. Of these, since the heat ray shielding function is high, preferred are metal oxide particles, more preferred are ATO particles, GZO particles, IZO particles, ITO particles or tungsten oxide particles, further preferred are ITO particles or tungsten oxide particles, and especially preferred are ITO particles. It is also preferred that the heat shielding particles be tungsten oxide particles.

In particular, since the heat ray shielding function is high and the particles are readily available, preferred are tin-doped indium oxide particles (ITO particles) or tungsten oxide particles, and more preferred are tin-doped indium oxide particles. Moreover, since the heat shielding properties are effectively enhanced, it is preferred that the above-mentioned interlayer film include tin-doped indium oxide particles and tungsten oxide particles.

Since the heat ray shielding properties are sufficiently enhanced, it is preferred that the lattice constant of a crystal of the ITO particle fall within the range of 10.11 A to 10.16 Å. In general, the lattice constant of a crystal of an ITO particle is included within the range of 10.11 Å to 10.16 Å, and the lattice constant of a crystal of the ITO particle used in examples described below is also included within the range of 10.11 Å to 10.16 Å.

The tungsten oxide particles are generally represented by the following formula (X1) or the following formula (X2). For the above-mentioned interlayer film, the tungsten oxide particles represented by the following formula (X1) or the following formula (X2) are suitably used.

W_{y}O_{z} ... Formula (X1)

In the foregoing formula (X1), W represents tungsten, O represents oxygen, and y and z satisfy 2.0 < z/y < 3.0.

MₓW_{y}O_{z} ... Formula (X2)

In the foregoing formula (X2), M represents at least one kind of element selected from the group consisting of H, He, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta and Re, W represents tungsten, O represents oxygen, and x, y and z satisfy 0.001 ≤ x/y ≤ 1, and 2.0 < z/y ≤ 3.0.

From the viewpoint of further enhancing the heat shielding properties of the interlayer film and laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding properties of the interlayer film and laminated glass, cesium-doped tungsten oxide particles are especially preferred. From the viewpoint of still further enhancing the heat shielding properties of the interlayer film and laminated glass, it is preferred that the cesium-doped tungsten oxide particles be tungsten oxide particles represented by the formula: Cs_{0.33}WO₃.

From the viewpoint of further enhancing the transparency and the heat shielding properties of laminated glass, the average particle diameter of the heat shielding particles is preferably greater than or equal to 10 nm, more preferably greater than or equal to 20 nm, preferably less than or equal to 100 nm, more preferably less than or equal to 80 nm, and further preferably less than or equal to 50 nm. When the average particle diameter is greater than or equal to the above lower limit, the heat ray shielding properties are sufficiently enhanced. When the average particle diameter is less than or equal to the above upper limit, the dispersibility of the heat shielding particles is enhanced and the transparency of laminated glass is enhanced.

The "average particle diameter" refers to a volume average particle diameter. The average particle diameter can be measured using a particle size distribution measuring apparatus ("UPA-EX150" manufactured by NIKKISO CO., LTD.) or the like.

The content of the heat shielding particles is not particularly limited. In 100% by weight of the above-mentioned interlayer film, the content of the heat shielding particles is preferably greater than or equal to 0.00001% by weight, more preferably greater than or equal to 0.01% by weight, still more preferably greater than or equal to 0.02% by weight, further preferably greater than or equal to 0.03% by weight, still further preferably greater than or equal to 0.05% by weight, especially preferably greater than or equal to 0.1% by weight, most preferably greater than or equal to 0.2% by weight, preferably less than or equal to 3% by weight, more preferably less than or equal to 1% by weight, still more preferably less than or equal to 0.8% by weight, further preferably less than or equal to 0.7% by weight, especially preferably less than or equal to 0.5% by weight, and most preferably less than or equal to 0.2% by weight. When the content of the heat shielding particles is greater than or equal to the above lower limit, the heat shielding properties are sufficiently enhanced. When the content of the heat shielding particles is less than or equal to the above upper limit, the visible light transmittance is sufficiently enhanced. For example, it is possible to allow the visible light transmittance to be greater than or equal to 70%. It is especially preferred that the content of the heat shielding particles be greater than or equal to 0.01% by weight and less than or equal to 1% by weight.

In 100% by weight of the above-mentioned interlayer film, the content of the ITO particles is preferably greater than or equal to 0.0001% by weight, more preferably greater than or equal to 0.001% by weight, especially preferably greater than or equal to 0.05% by weight, preferably less than or equal to 1% by weight, more preferably less than or equal to 0.8% by weight, further preferably less than or equal to 0.7% by weight, and especially preferably less than or equal to 0.2% by weight. When the content of the ITO particles is greater than or equal to the above lower limit and less than or equal to the above upper limit, the heat shielding properties are sufficiently enhanced, the solar transmittance (Ts2100) is sufficiently lowered, and feeling of scorching hotness caused by sunlight is further suppressed. Moreover, the visible light transmittance is sufficiently enhanced. Moreover, it is possible to attain a haze which is preferable as that of laminated glass.

In 100% by weight of the above-mentioned interlayer film, the content of the tungsten oxide particles is preferably greater than or equal to 0.00001% by weight, more preferably greater than or equal to 0.0001% by weight, further preferably greater than or equal to 0.0005% by weight, especially preferably greater than or equal to 0.001% by weight, most preferably greater than or equal to 0.01% by weight, preferably less than or equal to 0.1% by weight, more preferably less than or equal to 0.06% by weight, further preferably less than or equal to 0.05% by weight, and especially preferably less than or equal to 0.04% by weight. When the content of the tungsten oxide particles is greater than or equal to the above lower limit and less than or equal to the above upper limit, the heat shielding properties are sufficiently enhanced, and the visible light transmittance is sufficiently enhanced. For example, it is possible to allow the visible light transmittance of laminated glass to be greater than or equal to 70%. Moreover, when the content of the tungsten oxide particles is greater than or equal to the above lower limit and less than or equal to the above upper limit, feeling of scorching hotness caused by sunlight is further suppressed, and the detection accuracy of various sensors provided to laminated glass is further enhanced.

### (Ingredient X)

It is preferred that the above-mentioned interlayer film include the above-mentioned Ingredient X. The ingredient X is at least one kind of ingredient among a phthalocyanine compound, a naphthalocyanine compound and an anthracyanine compound. The ingredient X is also a heat shielding ingredient. By the use of the heat shielding particles and the Ingredient X together in the interlayer film as a whole, infrared rays (heat rays) can be effectively cut off.

The Ingredient X is not particularly limited. As the Ingredient X, a conventionally known phthalocyanine compound, naphthalocyanine compound and anthracyanine compound can be used. One kind of the Ingredient X may be used alone and two or more kinds thereof may be combinedly used.

Examples of the Ingredient X include phthalocyanine, a derivative of phthalocyanine, naphthalocyanine, a derivative of naphthalocyanine, anthracyanine, a derivative of anthracyanine, and the like. It is preferred that the phthalocyanine compound and the derivative of phthalocyanine each have a phthalocyanine skeleton. It is preferred that the naphthalocyanine compound and the derivative of naphthalocyanine each have a naphthalocyanine skeleton. It is preferred that the anthracyanine compound and the derivative of anthracyanine each have an anthracyanine skeleton.

From the viewpoint of further enhancing the heat shielding properties of the interlayer film and laminated glass, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the viewpoint of still further enhancing the heat shielding properties of the interlayer film and laminated glass, it is preferred that the Ingredient X have a structural unit in which an oxygen atom is bonded to a vanadium atom. It is preferred that the Ingredient X be a phthalocyanine compound, and it is more preferred that the Ingredient X be a phthalocyanine compound containing vanadium atoms.

The content of the Ingredient X in the interlayer film is not particularly limited. In 100% by weight of the interlayer film, the content of the Ingredient X is preferably greater than or equal to 0.000001% by weight, more preferably greater than or equal to 0.00001% by weight, further preferably greater than or equal to 0.001% by weight, especially preferably greater than or equal to 0.002% by weight, preferably less than or equal to 0.05% by weight, more preferably less than or equal to 0.03% by weight, and further preferably less than or equal to 0.01% by weight. When the content of the Ingredient X is greater than or equal to the above lower limit and less than or equal to the above upper limit, the heat shielding properties are sufficiently enhanced, the solar transmittance (Ts2100) is sufficiently lowered, and the visible light transmittance is sufficiently enhanced. For example, it is possible to allow the visible light transmittance to be greater than or equal to 70%. Moreover, it is possible to attain a color tone which is preferable as that of laminated glass.

### (Ultraviolet ray shielding agent)

It is preferred that the above-mentioned interlayer film include an ultraviolet ray shielding agent. By the use of an ultraviolet ray shielding agent, even when the interlayer and the laminated glass are used for a long period of time, the visible light transmittance becomes further difficult to be lowered. One kind of the ultraviolet ray shielding agent may be used alone and two or more kinds thereof may be combinedly used.

Examples of the ultraviolet ray shielding agent include an ultraviolet ray absorber. It is preferred that the ultraviolet ray shielding agent be an ultraviolet ray absorber.

Examples of a common ultraviolet ray shielding agent which is heretofore widely known include a metal-based ultraviolet ray shielding agent, a metal oxide-based ultraviolet ray shielding agent, a benzotriazole-based ultraviolet ray shielding agent (an ultraviolet ray shielding agent having a benzotriazole skeleton), a benzophenone-based ultraviolet ray shielding agent (an ultraviolet ray shielding agent having a benzophenone skeleton), a triazine-based ultraviolet ray shielding agent (an ultraviolet ray shielding agent having a triazine skeleton), a benzoate-based ultraviolet ray shielding agent (an ultraviolet ray shielding agent having a benzoate skeleton), and the like.

Examples of the metal-based ultraviolet ray absorber include platinum particles, particles in which the surface of platinum particles is coated with silica, palladium particles, particles in which the surface of palladium particles is coated with silica, and the like. It is preferred that the ultraviolet ray shielding agent not be heat shielding particles. The ultraviolet ray shielding agent is preferably a benzotriazole-based ultraviolet ray shielding agent, a benzophenone-based ultraviolet ray shielding agent, a triazine-based ultraviolet ray shielding agent or a benzoate-based ultraviolet ray shielding agent, more preferably a benzotriazole-based ultraviolet ray shielding agent or a benzophenone-based ultraviolet ray shielding agent, and further preferably a benzotriazole-based ultraviolet ray shielding agent.

Examples of the metal oxide-based ultraviolet ray absorber include zinc oxide, titanium oxide, cerium oxide, and the like. Furthermore, with regard to the metal oxide-based ultraviolet ray absorber, the surface thereof may be coated with any material. Examples of the coating material for the surface of the metal oxide-based ultraviolet ray absorber include an insulating metal oxide, a hydrolyzable organosilicon compound, a silicone compound, and the like.

Examples of the insulating metal oxide include silica, alumina, zirconia and the like. For example, the insulating metal oxide has a band-gap energy greater than or equal to 5.0 eV.

Examples of the benzotriazole-based ultraviolet ray absorber or the benzotriazole-based ultraviolet ray shielding agent include benzotriazole-based ultraviolet ray absorbers such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriaz ole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet ray shielding agent be a benzotriazole-based ultraviolet ray absorber containing halogen atoms, and it is more preferred that the ultraviolet ray shielding agent be a benzotriazole-based ultraviolet ray absorber containing chlorine atoms, since those are excellent in ultraviolet ray absorbing performance.

Examples of the benzophenone-based ultraviolet ray absorber or the benzophenone-based ultraviolet ray shielding agent include octabenzone ("Chimassorb 81" available from BASF Japan Ltd.) and the like.

Examples of the triazine-based ultraviolet ray absorber or the triazine-based ultraviolet ray shielding agent include 6,6',6''-[(1,3,5-triazine-2,4,6-triyl)tris(3-hexyloxy-2-met hylphenol)] (2,4,6-tris(2-hydroxy-4-hydroxy-3-methylphenyl-)-1,3,5-tria zine) ("LA-F70" available from ADEKA CORPORATION), 2-(4,6-diphenyl-1,3,5-triazin-2-yl)-5-[(hexyl)oxy]-phenol ("Tinuvin 1577FF" available from BASF Japan Ltd.) and the like.

Examples of the benzoate-based ultraviolet ray absorber or the benzoate-based ultraviolet ray shielding agent include 2,4-di-tert-butylphenyl-3,5-di-tert-butyl-4-hydroxybenzoate ("Tinuvin 120" available from BASF Japan Ltd.) and the like.

It is preferred that the interlayer film include an ultraviolet ray shielding agent having a maximum absorption wavelength on the longest wavelength side at a wavelength less than 350 nm (hereinafter, may be described as Ultraviolet ray shielding agent Y). By allowing the Ultraviolet ray shielding agent Y to have a maximum absorption wavelength on the longest wavelength side at a wavelength less than 350 nm, the ultraviolet ray shielding properties can be effectively enhanced and the deterioration of tungsten oxide particles can be effectively suppressed. The lower limit of the maximum absorption wavelength on the longest wavelength side of the Ultraviolet ray shielding agent Y is not particularly limited as long as the function of shielding ultraviolet rays is exerted. The maximum absorption wavelength on the longest wavelength side of the Ultraviolet ray shielding agent Y is preferably greater than or equal to 250 nm and more preferably greater than or equal to 290 nm. One kind of the Ultraviolet ray shielding agent Y may be used alone and two or more kinds thereof may be combinedly used.

The maximum absorption wavelength can be measured with a liquid containing 0.01% by weight of an ultraviolet ray shielding agent and 99.9% by weight of triethylene glycol di-2-ethylhexanoate, and for example, using a quartz cell (1 mm in cell length).

From the viewpoints of enhancing the ultraviolet ray shielding properties and still further suppressing the lowering in visible light transmittance after the lapse of time, it is preferred that the Ultraviolet ray shielding agent Y contain a benzotriazole compound, a benzophenone compound, a triazine compound, a malonic acid ester compound or an anilide oxalate compound, and it is more preferred that the Ultraviolet ray shielding agent Y contain a triazine compound or a malonic acid ester compound. The Ultraviolet ray shielding agent Y preferably contains a benzotriazole compound, preferably contains a benzophenone compound, preferably contains a triazine compound, preferably contains a malonic acid ester compound, and preferably contains an anilide oxalate compound.

From the viewpoint of further suppressing the lowering in visible light transmittance after the lapse of time of the interlayer film and laminated glass, it is more preferred that the Ultraviolet ray shielding agent Y contain 6,6',6''-[(1,3,5-triazine-2,4,6-triyl)tris(3-hexyloxy-2-met hylphenol)], 2-ethyl-2'-ethoxy-oxyanilide ("Sanduvor VSU" available from Clariant Japan K.K.), malonic acid[(4-methoxyphenyl)-methylene]-dimethyl ester ("Hostavin PR-25" available from Clariant Japan K.K.), or 2-[2-hydroxy-4-[(octyloxycarbonyl)ethylideneoxy]phenyl-4,6-di(4-phenyl)phenyl-1,3,5-triazine ("Tinuvin 479" available from BASF Japan Ltd.), and it is more preferred that the Ultraviolet ray shielding agent Y contain 6,6',6''-[(1,3,5-triazine-2,4,6-triyl)tris(3-hexyloxy-2-met hylphenol)] or malonic acid[(4-methoxyphenyl)-methylene]-dimethyl ester. The Ultraviolet ray shielding agent Y preferably contains 6,6',6''-[(1,3,5-triazine-2,4,6-triyl)tris(3-hexyloxy-2-met hylphenol)], preferably contains 2-ethyl-2'-ethoxy-oxyanilide, preferably contains malonic acid[(4-methoxyphenyl)-methylene]-dimethyl ester, and preferably contains 2-[2-hydroxy-4-[(octyloxycarbonyl)ethylideneoxy]phenyl-4,6-di(4-phenyl)phenyl-1,3,5-triazine.

From the viewpoints of enhancing the ultraviolet ray shielding properties and still further suppressing the lowering in visible light transmittance after the lapse of time, it is preferred that the interlayer film include a triazine compound and a malonic acid ester compound, it is more preferred that the interlayer film include 6,6',6''-[(1,3,5-triazine-2,4,6-triyl)tris(3-hexyloxy-2-met hylphenol)] and a malonic acid ester compound, and it is further preferred that the interlayer film include 6,6',6''-[(1,3,5-triazine-2,4,6-triyl)tris(3-hexyloxy-2-met hylphenol)] and malonic acid[(4-methoxyphenyl)-methylene]-dimethyl ester.

The content of the ultraviolet ray shielding agent in the interlayer film is not particularly limited. From the viewpoint of further suppressing the lowering in visible light transmittance after the lapse of time, in 100% by weight of the interlayer film, the content of the ultraviolet ray shielding agent is preferably greater than or equal to 0.1% by weight, more preferably greater than or equal to 0.2% by weight, further preferably greater than or equal to 0.3% by weight, especially preferably greater than or equal to 0.5% by weight, preferably less than or equal to 2.5% by weight, more preferably less than or equal to 2% by weight, further preferably less than or equal to 1.5% by weight, especially preferably less than or equal to 1% by weight, and most preferably less than or equal to 0.8% by weight. In particular, by allowing the content of the ultraviolet ray shielding agent to be greater than or equal to 0.2% by weight in 100% by weight of the interlayer film, the lowering in visible light transmittance of the interlayer film and laminated glass after the lapse of time can be significantly suppressed.

From the viewpoint of further suppressing the lowering in visible light transmittance after the lapse of time, in 100% by weight of the interlayer film, the content of the Ultraviolet ray shielding agent Y is preferably greater than or equal to 0.1% by weight, more preferably greater than or equal to 0.2% by weight, further preferably greater than or equal to 0.3% by weight, especially preferably greater than or equal to 0.5% by weight, preferably less than or equal to 2.5% by weight, more preferably less than or equal to 2% by weight, further preferably less than or equal to 1.5% by weight, especially preferably less than or equal to 1% by weight, and most preferably less than or equal to 0.8% by weight.

### (Oxidation inhibitor)

It is preferred that the above-mentioned interlayer film include an oxidation inhibitor. One kind of the oxidation inhibitor may be used alone and two or more kinds thereof may be combinedly used.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionat e]methane, 1,3,3-tris-(2-methyl-4-hydroxy-5-t-butylphenol)butane, 1,3,5-trimethyl-2,4,6-tris(3,5-di-t-butyl-4-hydroxybenzyl)b enzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl)phosphite, bis(2,4-di-t-butyl-6-methylphenyl)ethyl ester phosphorous acid, tris(2,4-di-t-butylphenyl)phosphite, 2,2'-methylenebis(4,6-di-t-butyl-1-phenyloxy) (2-ethylhexylo xy)phosphorus, and the like. One kind or two or more kinds among these oxidation inhibitors are suitably used.

Examples of a commercial product of the oxidation inhibitor include "Sumilizer BHT" available from Sumitomo Chemical Co., Ltd., "Irganox 1010" available from BASF Japan Ltd., and the like.

In order to maintain high visible light transmittance of the interlayer film and laminated glass over a long period of time, it is preferred that the content of the oxidation inhibitor be greater than or equal to 0.1% by weight in 100% by weight of the interlayer film. Moreover, since an effect commensurate with the addition of an oxidation inhibitor is not attained, it is preferred that the content of the oxidation inhibitor be less than or equal to 2% by weight in 100% by weight of the interlayer film.

From the viewpoint of further enhancing the heat shielding properties and the visible light transmittance of the interlayer film and laminated glass as well as the visible light transmittance after the lapse of time of the interlayer film and laminated glass, the content of the oxidation inhibitor is preferably greater than or equal to 0.1% by weight in 100% by weight of the interlayer film. Moreover, in order to suppress the discoloration of the peripheral part due to the influence of the oxidation inhibitor, the content of the oxidation inhibitor is preferably less than or equal to 2% by weight, and more preferably less than or equal to 1.8% by weight in 100% by weight of the interlayer film.

### (Metal salt)

It is preferred that the above-mentioned interlayer film include at least one kind of metal salt (hereinafter, may be described as Metal salt M) among an alkali metal salt and an alkaline earth metal salt. By the use of the Metal salt M, controlling the adhesiveness between a laminated glass member and the interlayer film or the adhesiveness between respective layers in the interlayer film is facilitated. Furthermore, by allowing the interlayer film to include the Metal salt M, the light resistance of the interlayer film is further enhanced and high visible light transmittance can be maintained over a longer period of time. One kind of the Metal salt M may be used alone and two or more kinds thereof may be combinedly used.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutanoate, potassium 2-ethylbutanoate, magnesium 2-ethylhexanoate, potassium 2-ethylhexanoate, and the like.

In the case where the interlayer film includes the Metal salt M, the content of the Metal salt M is preferably greater than or equal to 5 ppm, more preferably greater than or equal to 10 ppm, further preferably greater than or equal to 20 ppm, especially preferably greater than or equal to 50 ppm, preferably less than or equal to 300 ppm, more preferably less than or equal to 250 ppm, and further preferably less than or equal to 200 ppm. When the content of the Metal salt M is greater than or equal to the above lower limit and less than or equal to the above upper limit, the adhesiveness between a laminated glass member and the interlayer film or the adhesiveness between respective layers in the interlayer film can be further well controlled. Furthermore, when the content of the Metal salt M is greater than or equal to the above lower limit, the light resistance of the interlayer film is still further enhanced and high visible light transmittance can be maintained over a further longer period of time.

### (Other ingredients)

The above-mentioned interlayer film may include additives such as a light stabilizer, a flame retardant, an antistatic agent, a pigment, a dye, an adhesive force regulating agent, a moisture-resistance improving agent, a fluorescent brightening agent and an infrared ray absorber, as necessary. One kind of these additives may be used alone, and two or more kinds thereof may be combinedly used.

### (Interlayer film for laminated glass)

The thickness of the above-mentioned interlayer film for laminated glass is not particularly limited. From the viewpoint of the practical aspect and the viewpoint of sufficiently enhancing the heat shielding properties, the thickness of the interlayer film is preferably greater than or equal to 0.1 mm, more preferably greater than or equal to 0.25 mm, preferably less than or equal to 3 mm, and more preferably less than or equal to 1.5 mm. When the thickness of the interlayer film is greater than or equal to the above lower limit, the penetration resistance of laminated glass is enhanced.

The production method of the above-mentioned interlayer film for laminated glass is not particularly limited. As the production method of the interlayer film, a conventionally known method can be used. Examples thereof include a production method of kneading a thermoplastic resin, heat shielding particles, a corrosion inhibitor and other ingredients blended as necessary and forming the kneaded product into an interlayer film. A production method of extrusion-molding is preferred because the method is suitable for continuous production.

The above-mentioned method for kneading is not particularly limited. Examples of this method include a method using an extruder, a plastograph, a kneader, a banbury mixer, a calender roll, and the like. Of these, a method using an extruder is preferred and a method using a twin screw extruder is more preferred because the methods are suitable for continuous production.

### (Laminated glass)

The laminated glass according to the present invention is provided with a first laminated glass member, a second laminated glass member and an interlayer film arranged between the first laminated glass member and the second laminated glass member. The above-mentioned laminated glass may be provided with a single-layered interlayer film having a one-layer structure and may be provided with a multi-layered interlayer film having a two or more-layered structure. The above-mentioned laminated glass is provided with a single-layered or multi-layered interlayer film. The interlayer film in the above-mentioned laminated glass includes the interlayer film for laminated glass according to the present invention. Thus, the interlayer film as a whole in the above-mentioned laminated glass includes a thermoplastic resin, heat shielding particles and a corrosion inhibitor.

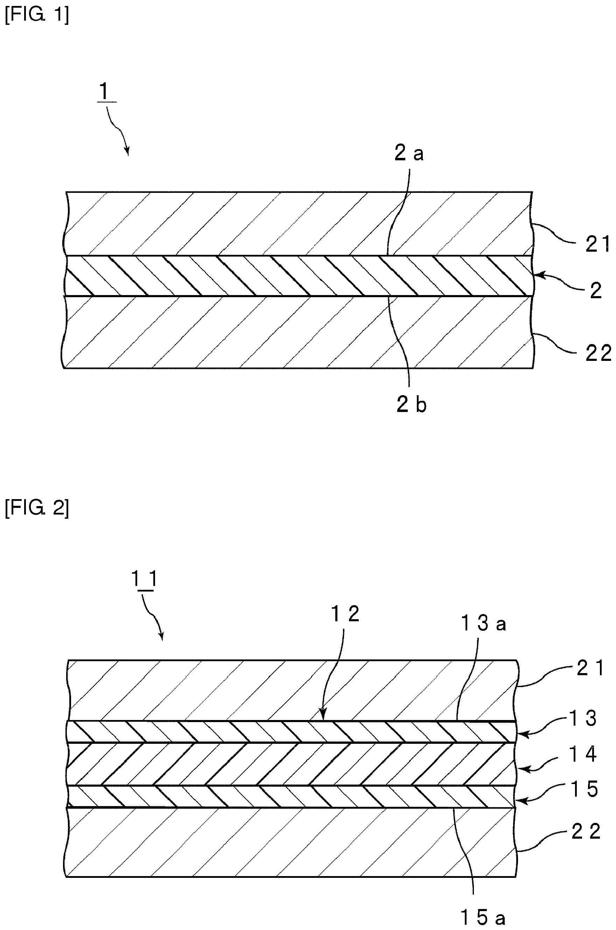

Fig. 1 shows a cross-sectional view of an example of laminated glass prepared with an interlayer film for laminated glass in accordance with one embodiment of the present invention.

Laminated glass 1 shown in Fig. 1 is provided with an interlayer film 2, a first laminated glass member 21 and a second laminated glass member 22. The interlayer film 2 is a single-layered interlayer film. The interlayer film 2 includes a thermoplastic resin, heat shielding particles and a corrosion inhibitor. The interlayer film 2 is used for obtaining laminated glass. The interlayer film 2 is an interlayer film for laminated glass.

The interlayer film 2 is arranged between the first laminated glass member 21 and the second laminated glass member 22 to be sandwiched. The first laminated glass member 21 is layered on a first surface 2a (one surface) of the interlayer film 2. The second laminated glass member 22 is layered on a second surface 2b (the other surface) opposite to the first surface 2a of the interlayer film 2.

Fig. 2 shows a cross-sectional view of another example of laminated glass prepared with an interlayer film for laminated glass in accordance with another embodiment of the present invention.

Laminated glass 11 shown in Fig. 2 is provided with an interlayer film 12, a first laminated glass member 21 and a second laminated glass member 22. The interlayer film 12 is a multi-layered interlayer film. The interlayer film 12 has a structure in which three interlayer films of a first layer 13, a second layer 14 and a third layer 15 are layered in this order. The interlayer film 12 as a whole includes a thermoplastic resin, heat shielding particles and a corrosion inhibitor. In the present embodiment, the second layer 14 is a heat shielding layer and includes a thermoplastic resin, heat shielding particles and a corrosion inhibitor. It is preferred that the second layer 14 include a thermoplastic resin. The second layer 14 may not include the above-mentioned heat shielding particles and may not include the above-mentioned corrosion inhibitor. The first layer 13 and the third layer 15 are protective layers. It is preferred that the first layer 13 and the third layer 15 include a thermoplastic resin. The first layer 13 and the third layer 15 may include the above-mentioned heat shielding particles and may include the above-mentioned corrosion inhibitor. The interlayer film 12 is used for obtaining laminated glass. The interlayer film 12 is an interlayer film for laminated glass.

The interlayer film 12 is arranged between the first laminated glass member 21 and the second laminated glass member 22 to be sandwiched. The first laminated glass member 21 is layered on an outer surface 13a of the first layer 13. The second laminated glass member 22 is layered on an outer surface 15a of the third layer 15.

Examples of the laminated glass member include a glass plate and a PET (polyethylene terephthalate) film and the like. The above-mentioned laminated glass includes not only laminated glass in which an interlayer film is arranged between two glass plates but also laminated glass in which an interlayer film is arranged between a glass plate and a PET film or the like. Laminated glass is a laminate provided with a glass plate, and it is preferred that at least one glass plate be used. It is preferred that the first laminated glass member and the second laminated glass member be each a glass plate or a PET film and at least one among the first laminated glass member and the second laminated glass member be a glass plate.

Examples of the glass plate include an inorganic glass plate and an organic glass plate. Examples of the inorganic glass plate include float plate glass, heat ray-absorbing plate glass, heat ray-reflecting plate glass, polished plate glass, molded plate glass, wired plate glass, clear glass and clear glass, and the like. The organic glass is synthetic resin glass substituted for inorganic glass. Examples of the organic glass plate include a polycarbonate plate, a poly(meth)acrylic resin plate, and the like. Examples of the poly(meth)acrylic resin plate include a polymethyl (meth) acrylate plate, and the like.

Although the thickness of the laminated glass member is not particularly limited, the thickness is preferably greater than or equal to 1 mm, preferably less than or equal to 5 mm, and more preferably less than or equal to 3 mm. Moreover, in the case where the laminated glass member is a glass plate, the thickness of the glass plate is preferably greater than or equal to 1 mm, preferably less than or equal to 5 mm, and more preferably less than or equal to 3 mm. In the case where the laminated glass member is a PET film, the thickness of the PET film is preferably greater than or equal to 0.03 mm and preferably less than or equal to 0.5 mm.

The production method of the above-mentioned laminated glass is not particularly limited. For example, an interlayer film is sandwiched between the first laminated glass member and the second laminated glass member, and the air remaining between the first laminated glass member and the interlayer film and between the second laminated glass member and the interlayer film is removed by allowing the members to pass through a pressing roll or by putting the members into a rubber bag and allowing the contents to be sucked under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The interlayer film and the laminated glass can be used for automobiles, railway vehicles, aircraft, ships, buildings and the like. It is preferred that the interlayer film be an interlayer film for construction or for vehicles, and it is more preferred that the interlayer film be an interlayer film for vehicles . It is preferred that the laminated glass be laminated glass for construction or for vehicles, and it is more preferred that the laminated glass be laminated glass for vehicles. The interlayer film and the laminated glass can also be used for applications other than these applications. The interlayer film and the laminated glass can be used for a windshield, side glass, clear glass or roof glass of an automobile, and the like. Since the interlayer film and the laminated glass are high in heat shielding properties, the interlayer film and the laminated glass are suitably used for automobiles. Moreover, since the laminated glass prepared with the interlayer film is high in light transmittance at a wavelength of 1550 nm and is capable of suppressing feeling of scorching hotness caused by sunlight made incident through the laminated glass, the interlayer film and the laminated glass are suitably used for automobiles. Moreover, since the laminated glass prepared with the interlayer film is high in light transmittance at a wavelength of 850 nm and is capable of enhancing the detection accuracy of various sensors fitted to the laminated glass, the interlayer film and the laminated glass are suitably used for automobiles.

From the viewpoint of obtaining laminated glass further excellent in transparency, the visible light transmittance of laminated glass is preferably greater than or equal to 65% and more preferably greater than or equal to 70%. The visible light transmittance of laminated glass can be measured in accordance with JIS R3211 (1998). The visible light transmittance of laminated glass obtained by sandwiching the interlayer film for laminated glass between two sheets of green glass (heat ray-absorbing plate glass) with a thickness of 2 mm in accordance with JIS R3208 is preferably greater than or equal to 70%.

The solar transmittance (Ts2100) of laminated glass is preferably less than or equal to 65%, more preferably less than or equal to 60%, further preferably less than or equal to 55%, and especially preferably less than or equal to 50%. The solar transmittance of laminated glass can be measured in accordance with JIS R3106 (1998). The solar transmittance of laminated glass obtained by sandwiching the interlayer film for laminated glass between two sheets of green glass with a thickness of 2 mm in accordance with JIS R3208 is preferably less than or equal to 65%, more preferably less than or equal to 60%, further preferably less than or equal to 55%, and especially preferably less than or equal to 50%.

From the viewpoint of efficiently suppressing feeling of scorching hotness, the light transmittance at a wavelength of 1550 nm (T1550) of laminated glass is preferably less than or equal to 10%. The light transmittance at a wavelength of 1550 nm (T1550) of laminated glass obtained by sandwiching the interlayer film for laminated glass between two sheets of green glass with a thickness of 2 mm in accordance with JIS R3208 is preferably less than or equal to 10%. The light transmittance (T1550) can be measured in accordance with JIS R3106 (1998).

The light transmittance at a wavelength of 800 nm (T800) of laminated glass is preferably greater than or equal to 20%. The light transmittance at a wavelength of 800 nm (T800) of laminated glass obtained by sandwiching the interlayer film for laminated glass between two sheets of green glass with a thickness of 2 mm in accordance with JIS R3208 is preferably greater than or equal to 20%. The light transmittance (T800) can be measured in accordance with JIS R3106 (1998).

The haze value of laminated glass is preferably less than or equal to 2%, more preferably less than or equal to 1%, further preferably less than or equal to 0.5%, and especially preferably less than or equal to 0.4%. The haze value of laminated glass can be measured in accordance with JIS K6714.

Hereinafter, the present invention will be described in more detail with reference to examples. The present invention is not limited only to the following examples.

The following materials were used in examples and comparative examples.

### Thermoplastic resin:

"PVB1" (a polyvinyl butyral resin acetalized with n-butyl aldehyde, the average polymerization degree of 1700, the hydroxyl content of 30.5% by mol, the acetylation degree of 1% by mol, the butyralization degree of 68.5% by mol)

The hydroxyl content, the acetylation degree and the butyralization degree (the acetalization degree) of the above-mentioned polyvinyl butyral were measured by a method in accordance with ASTM D1396-92. Even in the cases of being measured according to JIS K6728 "Testing methods for polyvinyl butyral", numerical values similar to those obtained by a method in accordance with ASTM D1396-92 were exhibited.

### Plasticizer:

3GO (triethylene glycol di-2-ethylhexanoate)

### Heat shielding particles:

ITO (ITO particles, tin-doped indium oxide particles)
CWO (CWO particles, cesium-doped tungsten oxide particles (Cs_{0.33}WO₃))

### Ingredient X:

43V (Ingredient X, a phthalocyanine compound, "NIR-43V" available from YAMADA CHEMICAL CO., LTD. which contains a vanadium atom as the central metal)

### Metal salt:

Metal salt A (bis(2-ethylbutyric acid)magnesium salt)

### Ultraviolet ray shielding agent:

T-326 (2-(2'-hydroxy-3'-t-butyl-5-methylphenyl)-5-chlorobenzotria zole, "Tinuvin 326" available from BASF Japan Ltd., the maximum absorption wavelength on the longest wavelength side of 350 nm)

### Oxidation inhibitor:

BHT (2,6-di-t-butyl-p-cresol)

### Corrosion inhibitor:

5M-BTA ("5M-BTA" available from Johoku Chemical Co., Ltd., a compound represented by the foregoing formula (11A), R1, R3 and R4 in the foregoing formula (11A) each represent a hydrogen atom, R2 in the foregoing formula (11A) represents a methyl group)
BT-LX ("BT-LX" available from Johoku Chemical Co., Ltd., a compound represented by the following formula (101))

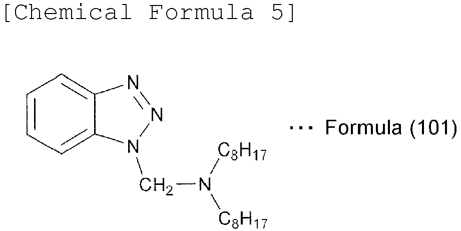

TT-LX ("TT-LX" available from Johoku Chemical Co., Ltd., a compound represented by the following formula (102))

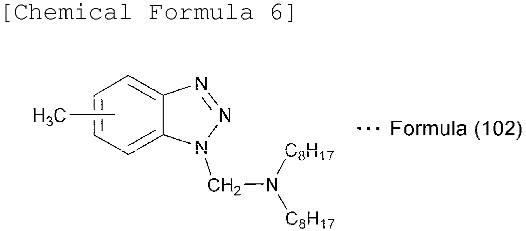

BT-120 ("BT-120" available from Johoku Chemical Co., Ltd., a compound represented by the foregoing formula (11A), in the foregoing formula (11A), R1 to R4 each represent a hydrogen atom)

### (Example 1)

### (1) Preparation of interlayer film

An ethanol solution containing Metal salt A (bis(2-ethylbutyric acid)magnesium salt) in 0.19% by weight content was prepared.

With the obtained ethanol solution in an amount that the magnesium concentration in the resulting interlayer film becomes 160 ppm, 39.5 parts by weight of a plasticizer (3GO), heat shielding particles (ITO) in an amount that the content thereof in 100% by weight of the resulting interlayer film becomes 0.12% by weight, heat shielding particles (CWO) in an amount that the content thereof in 100% by weight of the resulting interlayer film becomes 0.035% by weight, Ingredient X (43V) in an amount that the content thereof in 100% by weight of the resulting interlayer film becomes 0.006% by weight, and a corrosion inhibitor (5M-BTA) in an amount that the content thereof in 100% by weight of the resulting interlayer film becomes 0.30% by weight were mixed. Furthermore, a phosphoric acid ester compound which is a dispersing agent was added, after which the contents were mixed with a horizontal micro bead mill to obtain a dispersion. The content of the phosphoric acid ester compound was adjusted to be one-tenth of the total content of the heat shielding particles.

To 100 parts by weight of a polyvinyl butyral resin (PVB1), the whole amount of the dispersion obtained, an ultraviolet ray shielding agent (T-326) in an amount that the content thereof in the resulting interlayer film becomes 1.0% by weight, and an oxidation inhibitor (BHT) in an amount that the content thereof in 100% by weight of the resulting interlayer film becomes 0.2% by weight were added and thoroughly kneaded with a mixing roll to obtain a composition.

The composition obtained was extruded by an extruder to obtain a single-layered interlayer film with a thickness of 760 µm.

### (2) Preparation of Laminated glass A

The interlayer film obtained was cut into a size of 30 cm in length × 30 cm in width. Next, two sheets of green glass (30 cm in length × 30 cm in width × 2 mm in thickness) in accordance with JIS R3208 were prepared. The interlayer film obtained was sandwiched between the two sheets of green glass, the product was held in a vacuum laminator for 30 minutes at 90°C and pressed under vacuum to obtain a laminate. With regard to the laminate, interlayer film portions protruded from the glass plate were cut away to obtain a sheet of Laminated glass A.

### (Examples 2 to 6 and Comparative Examples 1 to 9)

A single-layered interlayer film was prepared in the same manner as in Example 1 except that the kind of ingredients to be blended and the content thereof were set to those listed in the following Tables 1 and 2. Using the interlayer film obtained, a sheet of laminated glass provided with the interlayer film was prepared in the same manner as in Example 1.

### (Evaluation)

### (1) Measurement of visible light transmittance (A light Y value, initial A-Y (380 to 780 nm))

The Laminated glass A obtained was measured for the visible light transmittance in the wavelength range of 380 to 780 nm in accordance with JIS R3211 (1998) using a spectrophotometer ("U-4100" available from Hitachi High-Technologies Corporation).

### (2) Measurement of light transmittance (initial T850 (850 nm))

The Laminated glass A obtained was measured for the light transmittance at a wavelength of 850 nm (T850 (850 nm)) by a method in accordance with JIS R3106 (1998) using a spectrophotometer ("U-4100" available from Hitachi High-Technologies Corporation).

### (3) Measurement of light transmittance (initial T1550 (1550 nm))

The Laminated glass A obtained was measured for the light transmittance at a wavelength of 1550 nm (T1550 (1550 nm)) by a method in accordance with JIS R3106 (1998) using a spectrophotometer ("U-4100" available from Hitachi High-Technologies Corporation).

### (4) Measurement of solar transmittance (initial Ts2100 (300 to 2100 nm))

The solar transmittance Ts in the wavelength range of 300 to 2100 nm (Ts2100) of the laminated glass obtained was determined in accordance with JIS R3106 (1998) using a spectrophotometer ("U-4100" available from Hitachi High-Technologies Corporation).

### (5) Heat resistance (ΔA-Y, ΔT850, ΔT1550 and ΔTs2100)

Laminated glass after stored for 2000 hours in the air under a constant temperature environment at 100°C was measured for the A-Y, T850, T1550 and Ts2100 by the above-mentioned method.

From the measured values obtained, ΔA-Y ((A-Y after storage) - (initial A-Y)), ΔT850 ((T850 after storage) - (initial T850)), ΔT1550 ((T1550 after storage) - (initial T1550)) and ΔTs2100 ((Ts2100 after storage) - (initial Ts2100)) were determined.

The results are shown in the following Tables 1 and 2. In the following Tables 1 and 2, the content of a plasticizer refers to the content thereof (parts by weight) relative to 100 parts by weight of the polyvinyl acetal resin. The content of each of heat shielding particles, Ingredient X, an oxidation inhibitor, an ultraviolet ray shielding agent and a corrosion inhibitor refers to the content thereof (% by weight) in 100% by weight of the interlayer film. The content of a metal salt refers to the magnesium concentration in the interlayer film.

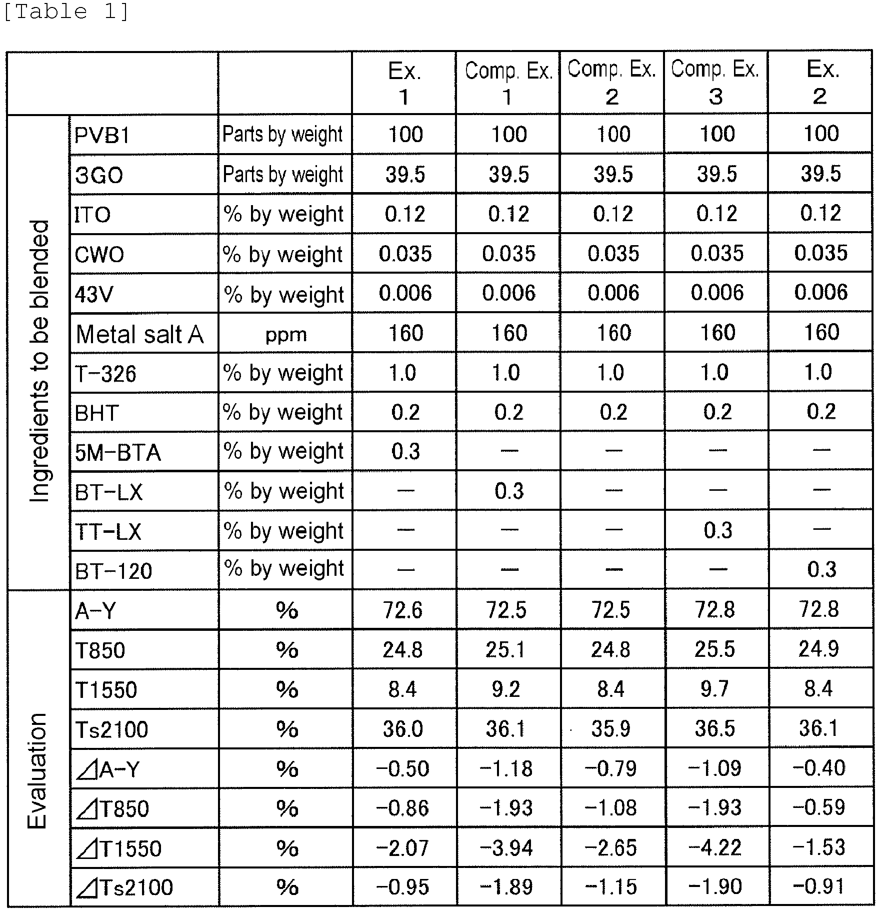

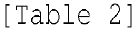

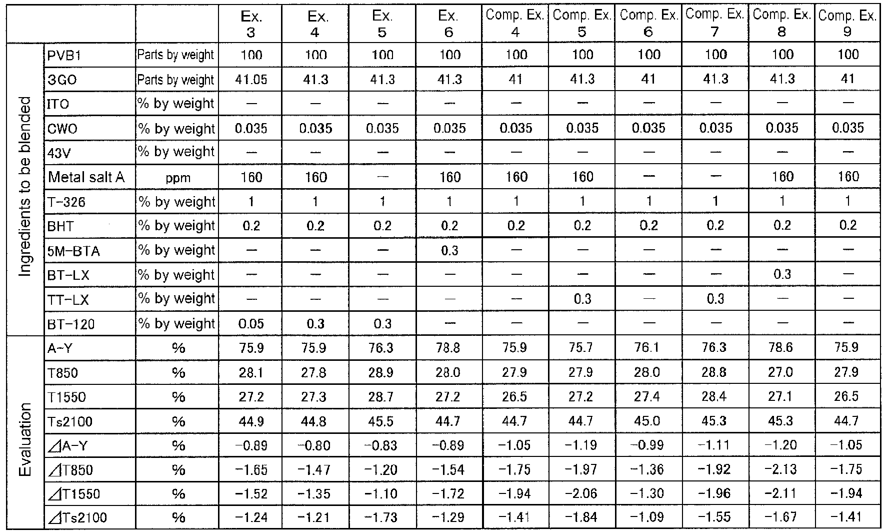

### EXPLANATION OF SYMBOLS

- 1:: Laminated glass
- 2:: Interlayer film
- 2a:: First surface
- 2b:: Second surface
- 11:: Laminated glass
- 12:: Interlayer film
- 13:: First layer
- 14:: Second layer
- 15:: Third layer
- 13a:: Outer surface
- 15a:: Outer surface
- 21:: First laminated glass member
- 22:: Second laminated glass member

## Claims

1. An interlayer film for laminated glass, comprising:
a thermoplastic resin, heat shielding particles and a corrosion inhibitor; and
the corrosion inhibitor being a corrosion inhibitor represented by the following formula (11):
[Chemical Formula 1] 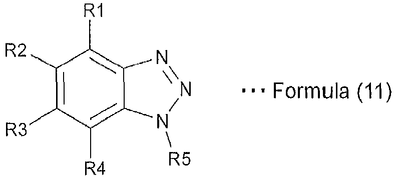 in the formula (11), R1 to R4 each represent a hydrogen atom or a methyl group, and R5 represents a hydrogen atom or an organic group having 1 to 30 carbon atoms but containing no nitrogen atom.

2. The interlayer film for laminated glass according to claim 1,
wherein the heat shielding particles contain tungsten oxide particles.

3. The interlayer film for laminated glass according to claim 2,
wherein the heat shielding particles contain tin-doped indium oxide particles and the tungsten oxide particles.

4. The interlayer film for laminated glass according to claim 1, comprising at least one kind of ingredient among a phthalocyanine compound, a naphthalocyanine compound and an anthracyanine compound.

5. The interlayer film for laminated glass according to claim 4,
wherein the heat shielding particles contain tungsten oxide particles, and
the interlayer film for laminated glass includes at least one kind of the ingredient among a phthalocyanine compound, a naphthalocyanine compound and an anthracyanine compound.

6. The interlayer film for laminated glass according to claim 4,
wherein the heat shielding particles contain tin-doped indium oxide particles and tungsten oxide particles, and
the interlayer film for laminated glass includes at least one kind of the ingredient among a phthalocyanine compound, a naphthalocyanine compound and an anthracyanine compound.

7. The interlayer film for laminated glass according to any one of claims 1 to 6, comprising a plasticizer.

8. The interlayer film for laminated glass according to any one of claims 1 to 7,
Wherein the corrosion inhibitor represented by the formula (11) is a corrosion inhibitor represented by the following formula (11A): 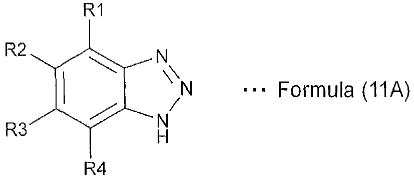 in the formula (11A), R1 to R4 each represent a hydrogen atom or a methyl group.

9. The interlayer film for laminated glass according to any one of claims 1 to 8, comprising:
A metal salt containing at least one kind of metal selected from the group consisting of Li, Na, K, Rb, Cs, Mg, Ca, Sr and Ba.

10. Laminated glass, comprising:
a first laminated glass member,
a second laminated glass member, and
the interlayer film for laminated glass according to any one of claims 1 to 9,
wherein the interlayer film for laminated glass is arranged between the first laminated glass member and the second laminated glass member.

## Patentansprüche

1. Zwischenschichtfolie für Verbundglas, umfassend:
ein thermoplastisches Harz, Hitzeschutzpartikel und einen Korrosionsinhibitor; und
wobei der Korrosionsinhibitor ein Korrosionsinhibitor, der durch die folgende Formel (11) dargestellt wird, ist: 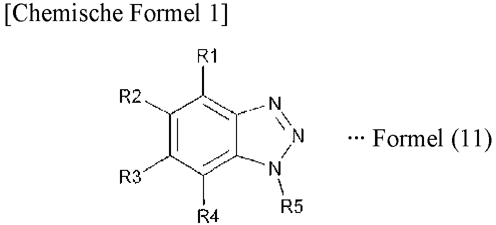 wobei in der Formel (11) R1 bis R4 jeweils ein Wasserstoffatom oder eine Methylgruppe darstellen, und R5 ein Wasserstoffatom oder eine organische Gruppe, die 1 bis 30 Kohlenstoffatome aufweist, aber kein Stickstoffatom enthält, darstellt.

2. Zwischenschichtfolie für Verbundglas nach Anspruch 1,
wobei die Hitzeschutzpartikel Wolframoxidpartikel enthalten.

3. Zwischenschichtfolie für Verbundglas nach Anspruch 2,
wobei die Hitzeschutzpartikel zinndotierte Indiumoxidpartikel und die Wolframoxidpartikel enthalten.

4. Zwischenschichtfolie für Verbundglas nach Anspruch 1, umfassend wenigstens eine Art von Bestandteil unter einer Phthalocyaninverbindung, einer Naphthalocyaninverbindung und einer Anthracyaninverbindung.

5. Zwischenschichtfolie für Verbundglas nach Anspruch 4,
wobei die Hitzeschutzpartikel Wolframoxidpartikel enthalten und
die Zwischenschichtfolie für Verbundglas wenigstens eine Art von Bestandteil unter einer Phthalocyaninverbindung, einer Naphthalocyaninverbindung und einer Anthracyaninverbindung beinhaltet.

6. Zwischenschichtfolie für Verbundglas nach Anspruch 4,
wobei die Hitzeschutzpartikel zinndotierte Indiumoxidpartikel und Wolframoxidpartikel enthalten und
die Zwischenschichtfolie für Verbundglas wenigstens eine Art von Bestandteil unter einer Phthalocyaninverbindung, einem Naphthalocyaninverbindung und eine Anthracyaninverbindung beinhaltet.

7. Zwischenschichtfolie für Verbundglas nach einem der Ansprüche 1 bis 6, umfassend einen Weichmacher.

8. Zwischenschichtfolie für Verbundglas nach einem der Ansprüche 1 bis 7,
wobei der Korrosionsinhibitor, der durch die Formel (11) dargestellt wird, ein Korrosionsinhibitor, der durch die folgende Formel (11A) dargestellt ist, ist: 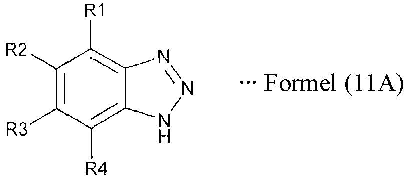 wobei, in der Formel (11A), R1 bis R4 jeweils ein Wasserstoffatom oder eine Methylgruppe darstellen.

9. Zwischenschichtfolie für Verbundglas nach einem der Ansprüche 1 bis 8, umfassend:
ein Metall salz, das wenigstens eine Art von Metall enthält, das aus der Gruppe ausgewählt ist, die aus Li, Na, K, Rb, Cs, Mg, Ca, Sr und Ba besteht.

10. Verbundglas, umfassend:
ein erstes Verbundglaselement,
ein zweites Verbundglaselement und
die Zwischenschichtfolie für Verbundglas nach einem der Ansprüche 1 bis 9,
wobei die Zwischenschichtfolie für Verbundglas zwischen dem ersten Verbundglaselement und dem zweiten Verbundglaselement angeordnet ist.

## Revendications

1. Film intercouche pour verre feuilleté, comprenant: une résine thermoplastique, des particules d'écran thermique et un inhibiteur de corrosion ; et
l'inhibiteur de corrosion étant un inhibiteur de corrosion représenté par la formule suivante (11) : 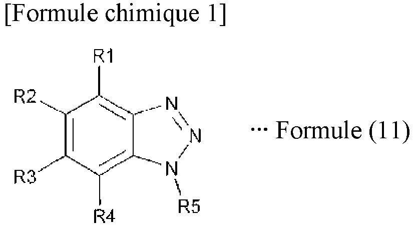 la formule (11), R1 à R4 représentent chacun un atome d'hydrogène ou un groupe méthyle, et R5 représente un atome d'hydrogène ou un groupe organique ayant 1 à 30 atomes de carbone mais ne contenant pas d'atome d'azote.

2. Film intercouche pour verre feuilleté selon la revendication 1, dans lequel les particules d'écran thermique contiennent des particules d'oxyde de tungstène.

3. Film intercouche pour verre feuilleté selon la revendication 2, dans lequel les particules d'écran thermique contiennent des particules d'oxyde d'indium dopées à l'étain et des particules d'oxyde de tungstène.

4. Film intercouche pour verre feuilleté selon la revendication 1, comprenant au moins un type d'ingrédient parmi un composé de phtalocyanine, un composé de naphtalocyanine et un composé d'anthracyanine.

5. Film intercouche pour verre feuilleté selon la revendication 4, dans lequel les particules d'écran thermique contiennent des particules d'oxyde de tungstène, et le film intercouche pour verre feuilleté comporte au moins un type d'ingrédient parmi un composé de phtalocyanine, un composé de naphtalocyanine et un composé d'anthracyanine.

6. Film intercouche pour verre feuilleté selon la revendication 4, dans lequel les particules d'écran thermique contiennent des particules d'oxyde d'indium dopées à l'étain et des particules d'oxyde de tungstène, et le film intercouche pour verre feuilleté comporte au moins un type d'ingrédient parmi un composé de phtalocyanine, un composé naphtalocyanine et un composé anthracyanine.

7. Film intercouche pour verre feuilleté selon l'une quelconque des revendications 1 à 6, comprenant en outre un plastifiant.

8. Film intercouche pour verre feuilleté selon l'une quelconque des revendications 1 à 7, dans lequel l'inhibiteur de corrosion représenté par la formule (11) est un inhibiteur de corrosion représenté par la formule suivante (11A) : 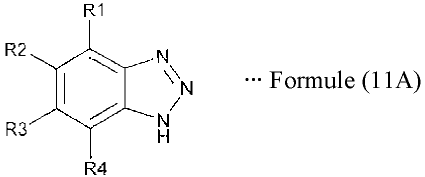 dans la formule (11A), R1 à R4 représentent chacun un atome d'hydrogène ou un groupe méthyle.

9. Film intercouche pour verre feuilleté selon l'une quelconque des revendications 1 à 8, comprenant :
Un sel métallique contenant au moins un type de métal choisi dans le groupe constitué par Li, Na, K, Rb, Cs, Mg, Ca, Sr et Ba.

10. Verre feuilleté, comprenant :
un premier élément de verre feuilleté,
un second élément de verre feuilleté, et
un film intercouche pour verre feuilleté selon l'une quelconque des revendications 1 à 9,
le film intercouche pour verre feuilleté étant disposé entre le premier élément de verre feuilleté et le second élément de verre feuilleté.
